# EUROPÄISCHE PATENTSCHRIFT

(11) **EP 0 861 386 B1**
(45) Veröffentlichungstag und Bekanntmachung des Hinweises auf die Patenterteilung: **14.06.2000**
(21) Anmeldenummer: 96939069.9
(22) Anmeldetag: 16.11.1996
(51) Int. Cl.: F16D 69/00

(54) **VERFAHREN ZUR HERSTELLUNG VON REIBBELÄGEN**
PROCESS FOR PRODUCING FRICTION LININGS
PROCEDE DE PRODUCTION DE GARNITURES DE FRICTION

(30) Priorität: 21.11.1995 DE 19543329
(43) Veröffentlichungstag der Anmeldung: 02.09.1998
(73) Patentinhaber: Frimatec Ingenieurgesellschaft mbH, 45899 Gelsenkirchen (DE)
(72) Erfinder: CZARNOWSKI, Klaus-Peter, D-45701 Herten (DE); GORNIK, Fred, D-45701 Herten (DE)
(74) Vertreter: Spalthoff, Adolf
(86) Internationale Anmeldenummer: EP9605042
(87) Internationale Veröffentlichungsnummer: WO9719277

(56) Entgegenhaltungen:
- EP-A- 0 100 233
- DE-A- 2 757 833
- DE-A- 3 736 813
- DE-A- 4 032 182
- DE-A- 4 445 882
- GB-A- 1 236 218
- GB-A- 1 413 130
- GB-A- 2 113 603
- US-A- 2 790 206
- US-A- 3 795 473
- US-A- 4 735 975
- US-A- 5 061 171
- PATENT ABSTRACTS OF JAPAN vol. 014, no. 469 (M-1034), 12.Oktober 1990 & JP 02 187324 A (HITACHI CHEM), 23.Juli 1990,

## Beschreibung

Die Erfindung bezieht sich auf ein Verfahren für die Herstellung von Reibbelägen, beispielsweise von Scheibenbremsbelägen für Personen- und Lastkraftwagen, Trommelbremsbelägen für Personen- und Lastkraftwagen, Kupplungsbelägen, Industriebelägen, Eisenbahnbelägen usw.

Bei einem bekannten derartigen Verfahren werden die Reibbeläge nach dem Mischen der Reibmassenmischung in separaten Einzelschritten mit vorgesehenen Fertigungsunterbrechungen für Liegezeiten hergestellt. Die Mischung des Reibmassenmaterials aus Rohstoffen erfolgt in einer oder mehreren Stufen. In einer Preßform oder mittels eines anderen geeigneten Verfahrens erhält die Reibmassenmischung die vorgesehene Form. Die gepreßten Reibbeläge werden in einem Härteofen ausgehärtet. Eine Endbearbeitung der Reibbeläge erfolgt durch Schleifen, Bohren ud.dgl. Es ist auch möglich, die Oberfläche der hergestellten Reibbeläge mittels Wärme nachzubehandeln. Auf eine derartige Nachbehandlung kann dann eine Lackierung, eine Qualitätskontrolle, eine Konfektionierung usw. erfolgen.

Bei den bekannten Verfahren ergibt sich aufgrund der zeitlich voneinander getrennten Aufeinanderfolge der einzelnen Verfahrensschritte eine relativ lange Durchlaufzeit für die Reibbeläge. Aufgrund der erforderlichen Wärmeprozesse ergibt sich ein hoher Energieaufwand, insbesondere da nach einzelnen Verfahrensschritten zunächst wieder auf Raumtemperatur abgekühlt wird. Darüber hinaus ergibt sich beim Transport der Reibbeläge ein nicht unbeträchtlicher Arbeitsaufwand.

Aus der EP 0 100 233 ist ein Verfahren zur Herstellung von Reibbelägen bekannt, bei dem das Ausgangsmaterial zunächst von zwei gegeneinander arbeitenden Walzen zu einem Zwischenprodukt verarbeitet wird, welches Streifenform aufweist und vorverdichtet ist. Aus diesem streifenförmigen Vorprodukt werden dann an einer Stanze od.dgl. Reibbeläge ausgeschnitten. Bei diesem bekannten Verfahren kommen zwischen den einzelnen Verfahrensschritten kontinuierliche Fördermittel zum Einsatz, wobei die ausgeformten Reibbeläge darüber hinaus in einem Durchlaufofen ausgehärtet werden. Das Verpressen des Reibbelagmaterials und die Formgebung des eigentlichen Reibbelags sind bei diesem bekannten Verfahren zwei voneinander separierte Verfahrensschritte.

Der Erfindung liegt die Aufgabe zugrunde, ein Verfahren zur Herstellung von Reibbelägen zur Verfügung zu stellen, das als Prozeßlinie kontinuierlich ohne Unterbrechung des Materialflusses läuft, so daß die bisher übliche Durchlaufzeit wesentlich verkürzt ist, und mittels dem die Fertigungstoleranzen der hergestellten Reibbeläge erheblich reduziert werden.

Diese Aufgabe wird erfindungsgemäß durch ein Verfahren zur Herstellung von Reibbelägen mit den im Patentanspruch 1 angegebenen Merkmalen gelöst. Erfindungsgemäß wird mit bekannten und speziell konzipierten Vorrichtungen und Anlagen eine kontinuierliche Fertigungslinie geschaffen, wodurch die bisher übliche Durchlaufzeit eines Reibbelags wesentlich verkürzt wird. Die in den Scorch-Preßstationen herrschenden Druckund Temperaturbedingungen können unter Berücksichtigung bereits bekannter Qualitäten und Eigenschaften der fertig gepreßten Reibbeläge variiert werden.

Darüber hinaus wird dadurch, daß die Reibbeläge während ihrer Fertigung während genau definierter Zeiten genau definierten Verfahrensparametern ausgesetzt werden, die Bandbreite der Fertigungstoleranzen wesentlich enger. Der grundsätzliche Unterschied zum herkömmlichen aus dem Stand der Technik bekannten Verfahren zur Herstellung von Reibbelägen ist, daß erfindungsgemäß die Herstellung von Reibbelägen in einem von Anfang bis Ende regelbaren und kontrolliert ablaufenden Prozeß vorgesehen ist. Durch die Einjustierung der vorgesehenen Prozeßparameter bei jedem Verfahrensschritt, z.B. bei der Mischung, der Dosierung, der Verpressung, läßt sich das erreichbare und vorgegebene qualitative Verfahrensprodukt in engen Toleranzen planen. Aufgrund der geschlossenen und kontinuierlichen Verfahrensführung kann somit eine höhere Qualität und Gleichmäßigkeit der hergestellten Reibbeläge sichergestellt werden. Im Gegensatz zu den herkömmlichen Verfahren zur Herstellung von Reibbelägen ist es nicht mehr möglich, daß erst nach aufwendigen Prüfungen eine Abweichung von der vorgegebenen Qualität der Reibbeläge erkannt wird.

Bei der Eingabe der Reibmasse in den Mischreaktor ist es im Falle des erfindungsgemäßen Verfahrens unerheblich, ob die vorhandene Reibmasse als fertiges Vorprodukt in den Mischreaktor eingesetzt wird, ob Vorstufen eingesetzt werden oder schon die Rohstoffe. Durch Einsatz von Lösungsmitteln, flüssigen Harzen oder anderen Bindemitteln oder durch Anschmelzen der bestehenden Bestandteile der Reibmasse unter Einwirkung von Temperatur kann das Granulatmaterial hergestellt werden. Erst aufgrund des Einsatzes von Granulatmaterial im weiteren Verfahren zur Herstellung von Reibbelägen ist es möglich, die folgenden Verfahrensschritte erfindungsgemäß zu gestalten. Aufgrund einer exakten Erfassung der Eigenschaften des Granulatmaterials, die bei diesem Material vergleichsweise einfach durchgeführt werden kann, können für die folgenden Verfahrensschritte Steuerungswerte zur Einstellung der bei den folgenden Verfahrensschritten einstellbaren Prozeßparameter ausgewählt werden. Bei der Erfassung der qualitativen Eigenschaften des Granulatmaterials sind beispielsweise die Teilchen- und Korncharakteristik des Granulatmaterials von Bedeutung, die darüber hinaus innerhalb einer bestimmten Bandbreite einstellbar sind. Aufgrund der hierfür ermittelten Werte können die Zeit, die Temperatur, und der Druck bei der Formgebung für das Granulatmaterial in den Preßformen und bei der Aushärtung der fertig gepreßten Reibbeläge in dem Durchlaufofen ausgewählt werden.

Vorteilhaft wird im Falle des erfindungsgemäßen Verfahrens zur Herstellung von Reibbelägen der Energieeinsatz weitestgehend verringert und optimiert. Die Aufeinanderfolge der einzelnen Verfahrensschritte ist so, daß die sich ergebenden Temperaturdifferenzen während der Verfahrensschritte möglichst gering sind, so daß möglichst wenig Energie zur Aufheizung bzw. zur Abkühlung der herzustellenden Reibbeläge erforderlich ist. Des weiteren ergibt sich eine beträchtliche Energieeinsparung dadurch, daß - im Gegensatz zu herkömmlichen Verfahren zur Herstellung von Reibbelägen - Einspannvorrichtungen oder Brenngestelle nicht mit aufgeheizt werden müssen. Im Vergleich zu aus dem Stand der Technik bekannten Verfahren zur Herstellung von Reibbelägen ist bei dem erfindungsgemäßen Verfahren die Herstellungszeit für einen Reibbelag auf etwa eine Stunde reduzierbar.

Aufgrund der im Falle des erfindungsgemäßen Verfahrens zur Herstellung von Reibbelägen ermöglichten Anpassung der Verfahrensparameter ist es möglich, die herzustellenden bzw. hergestellten Reibbeläge hinsichtlich ihrer Eigenschaften und Qualitäten weitestgehend an sich ändernde Anforderungen anzupassen.

Mit vergleichsweise geringem technisch-konstruktiven Aufwand können vorhandene Fertigungsanlagen zur Herstellung von Reibbelägen an das erfindungsgemäße Verfahren angepaßt werden.

Bei einer Ausgestaltung des erfindungsgemäßen Verfahrens, welches insbesondere zur Herstellung von Scheibenbremsbelägen zur Anwendung kommen soll, werden die fertig gepreßten Reibbeläge für ca. 35 Minuten im Durchlaufofen ausgehärtet und zwischen dem Durchlaufofen und den Scorch-Preßstationen auf einem kontinuierlichen Fördermittel transportiert.

Zweckmäßigerweise wird das Granulatmaterial und die Trägermasse automatisch in die Preßformen dosiert, wobei die Belagträger ebenfalls automatisch den Preßformen zugeführt werden.

Alternativ ist es auch möglich, den Preßformen Vorpreßlinge aus Reib- und ggf. Trägermasse und die Belagträger zuzuführen.

Eine nicht unbeträchtliche Energieeinsparung ergibt sich, wenn die fertig gepreßten Reibbeläge im wesentlichen mit der Temperatur, mit der sie die Preßformen verlassen, in den Durchlaufofen befördert werden.

Vorteilhaft können die ausgehärteten Reibbeläge stromab des Durchlaufofens und ggf. stromauf der Scorch-Preßstationen auf Stärkenendmaß geschliffen werden. Stromab der ggf. vorhandenen Scorch-Preßstationen ist es dann in einfacher Weise möglich, in die Reibbeläge Nuten und/oder Schrägen einzuschleifen.

Des weiteren ist eine Ausführungsform des erfindungsgemäßen Verfahrens zweckmäßig, bei der die Reibbeläge stromab der ggf. vorhandenen Scorch-Preßstationen lackiert werden. Zur Lackierung wird die Belagträgeroberfläche sandstrahlgeblasen, was zu einer Reinigung und Aufbereitung der Belagträgeroberfläche führt; hiernach werden zweckmäßigerweise die Reibbeläge auf die vorgegebene Lackiertemperatur gebracht, wonach die Belagträgeroberflächen mit Lack beschichtet werden; hierauf folgt die Trocknung oder Aushärtung des Lackes und danach die Abkühlung der Reibbeläge.

Eine Vorrichtung zur Durchführung des erfindungsgemäßen Verfahrens zur Herstellung von Reibbelägen hat einen Mischreaktor, in dem Reibmasse als Granulatmaterial herstellbar ist, eine Presse mit Preßformen, in denen das Granulatmaterial mit jeweils einem Belagträger während bis zu 120 Sekunden zu Reibbelägen verpreßbar ist, einen Durchlaufofen, in dem die in den Preßformen fertig gepreßten Reibbeläge während eines vorgegebenen Zeitraums einspannungsfrei aushärtbar sind und ein kontinuierliches Fördermittel, das zwischen der Presse und dem Durchlaufofen angeordnet ist. Mit dieser Vorrichtung zur Herstellung von Reibbelägen lassen sich die im Zusammenhang mit dem erfindungsgemäßen Verfahren beschriebenen Vorteile und Wirkungen erreichen.

Die Vorrichtung ist so ausgestaltet, daß in ihren Preßformen das Granulatmaterial mit Trägermasse und jeweils einem Belagträger verpreßbar ist und der vorgegebene Zeitraum auf ca. 35 Minuten einstellbar ist, wobei stromab des Durchlaufofens Scorch-Preßstationen vorgesehen sind, die hintereinander angeordnet sind und in denen die im Durchlaufofen ausgehärteten Reibbeläge in einem vorgebbaren Zeitzyklus vorgebbaren Druck- und Temperaturbedingungen unterwerfbar sind, und zwischen dem Durchlaufofen und den Scorch-Preßstationen ist ein kontinuierliches Fördermittel angeordnet. Die Vorrichtung ist insbesondere für die Herstellung von Scheibenbremsbelägen vorteilhaft anwendbar.

Als besonders zweckmäßige Gestaltung für den Mischreaktor hat sich ein Schrägtellermischer erwiesen.

Die Presse kann vorteilhaft als Rundtischpresse ausgebildet sein, wobei die Preßzeit bei bis zu 120 Sekunden liegt.
Der Maschinentakt der Rundtischpresse beträgt beispielsweise 7,5 Sekunden bei Scheibenbremsbelägen für Personenkraftwagen. Im Zusammenhang mit der vorzusehenden Preßzeit ergibt sich dann die Anzahl der im Falle der Rundtischpresse erforderlichen Preßformen.

Vorteilhafterweise ist stromab des Durchlaufofens und ggf. stromauf der Scorch-Preßstationen eine Schleifvorrichtung vorgesehen, mittels der die im Durchlaufofen ausgehärteten Reibbeläge auf ihr Stärkenendmaß schleifbar sind.

Die Scorch-Preßstationen sind hintereinander in Reihe angeordnet. Die Reibbeläge durchlaufen die einzelnen Scorch-Preßstationen nacheinander und werden, je nach gewünschten Qualitäten und Eigenschaften, in einem bestimmten vorgebbaren Zeitzyklus definierten Druck- und Temperaturbedingungen unterworfen.

Stromab der ggf. vorhandenen Scorch-Preßstationen ist eine weitere Schleifvorrichtung angeordnet, mittels der Nuten und/oder Schrägen in die Reibbeläge einschleifbar sind.

Stromab der Scorch-Preßstationen kann eine Lackieranlage angeordnet sein, in der die Reibbeläge mit Lack beschichtbar sind. Dieser sind zweckmäßigerweise eine Sandstrahlanlage, in der die Belagträgeroberflächen reinig- und aufbereitbar sind, und eine Kühlstrecke vorgeschaltet, in der Reibbeläge auf eine vorgebbare Lackiertemperatur bringbar sind, und ein Trockenofen, in dem der auf die Belagträgeroberflächen aufgebrachte Lack aushärt- oder trockenbar ist, und ein Kühlmodul nachgeschaltet, in dem die Reibbeläge abkühlbar sind.

Zur Sicherung eines kontinuierlichen Verfahrens zur Herstellung von Reibbelägen sind zwischen den einzelnen Bearbeitungsstationen und Vorrichtungen jeweils kontinuierliche Fördermittel vorgesehen, mittels denen ein kontinuierlicher Strom von Reibbelägen aufrecht erhalten wird. Diskontinuierliche und mit zusätzlichem Arbeitsaufwand einhergehende Transportvorgänge zwischen den einzelnen Verfahrensstationen werden somit vermieden.

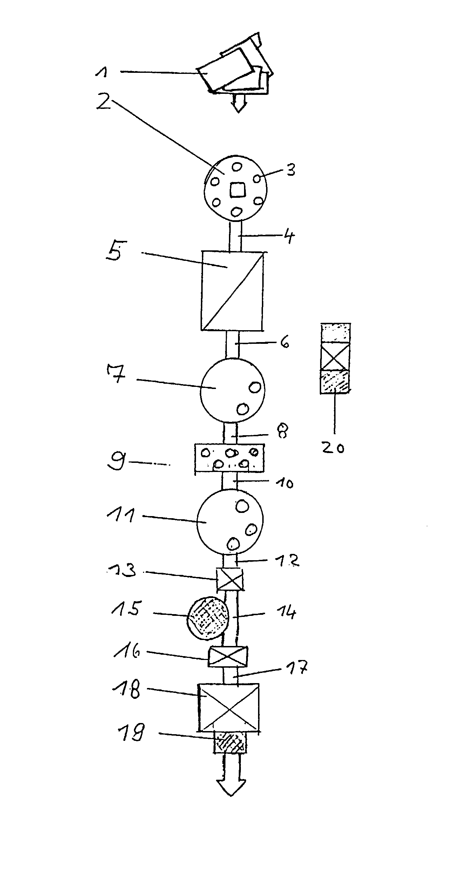

Im folgenden wird die Erfindung an Hand eines Ausführungsbeispiels unter Bezugnahme auf die Zeichnung näher erläutert, in der der Ablauf eines erfindungsgemäßen Verfahrens bzw. eine Vorrichtung zur Durchführung des erfindungsgemäßen Verfahrens zur Herstellung von Scheibenbremsbelägen im Prinzip dargestellt sind.

Zu Beginn wird eine Reibmasse in Form eines Granulatmaterials in einem Schrägtellermischer 1 hergestellt. Die Herstellung dieses Granulatmaterials erfolgt aus einem einstellbaren Anteil Kautschukbestandteile, einem einstellbaren Anteil Faserbestandteile und einem einstellbaren Anteil Reibwertbeeinflussungsstoffen. Das derart hergestellte Granulatmaterial ist staubfrei und rieselfähig.

Dieses Granulatmaterial wird mittels geeigneter Beschickungsvorrichtungen, zu denen an der als Rundtischpresse 2 ausgebildeten Presse vorgesehene Silos gehören können, automatisch in Preßformen 3 der Rundtischpresse 2 eindosiert. Das gleiche gilt für die für den Reibbelag erforderliche Trägermasse. Auch die Belagträger werden automatisch den Preßformen 3 zugeführt.

Die Preßzeit in den Preßformen 3 beträgt bis zu 120 Sekunden, je nachdem, wie die Trägermasse und die Reibmasse zusammengesetzt sind. Der Maschinentakt der Rundtischpresse 2 beträgt beispielsweise 7,5 Sekunden, die Anzahl der benötigten Preßformen wird durch die vorzusehende Preßzeit bestimmt.

Aus den Preßformen 3 geraten die fertig gepreßten Reibbeläge auf ein erstes kontinuierliches Fördermittel 4, welches sie zum Eingang eines Durchlaufofens 5 fördert, in den die fertig gepreßten Reibbeläge dann etwa mit der Temperatur eintreten, die sie beim Verlassen der Preßformen 3 aufweisen. In diesem Durchlaufofen 5 verbleiben die fertig gepreßten Reibbeläge ca. 35 Minuten, wobei sie frei und nicht eingespannt durch den Durchlaufofen 5 gefördert werden.

Dem Ausgang des Durchlaufofens 5 ist ein zweites kontinuierliches Fördermittel 6 zugeordnet, welches die im Durchlaufofen 5 ausgehärteten Reibbeläge an eine Schleifvorrichtung 7 übergibt, an der die ausgehärteten Reibbeläge mittels geeigneter Schleifwerkzeuge auf Stärkenendmaß geschliffen werden.

Sofern die Vorrichtung bzw. das erfindungsgemäße Verfahren zur Herstellung von Trommelbremsbelägen eingesetzt werden soll, weist die Schleifvorrichtung 7 geeignete Schleifwerkzeuge und eine Bohrvorrichtung auf, mittels denen die Trommelbremsbeläge fertigbearbeitet werden.

Nach dem Schleifvorgang werden die entsprechend bearbeiteten Reibbeläge von einem dritten kontinuierlichen Fördermittel 8 übernommen, welches die Reibbeläge einer Anzahl von hintereinander in Reihe angeordneten Scorch-Preßstationen 9 übergibt. Die Reibbeläge durchlaufen die hintereinander angeordneten Scorch-Preßstationen 9 nacheinander und werden, je nach gewünschten Qualitäten und Bremscharakteristiken, in einem bestimmten Zeitzyklus definierten Druck- und Temperaturbedingungen unterworfen.

Ein viertes kontinuierliches Fördermittel 10 nimmt die Reibbeläge aus der in Flußrichtung gesehen letzten Scorch-Preßstation 9 auf und übergibt die entsprechend behandelten Reibbeläge einer weiteren Schleifvorrichtung 11, in der in die Reibbeläge gewünschte Nuten und/oder Schrägen eingeschliffen werden.

Ein fünftes kontinuierliches Fördermittel 12 übernimmt die geschliffenen Reibbeläge aus der Schleifvorrichtung 11 und übergibt sie an eine Sandstrahlanlage 13, die stromauf einer Lackieranlage 16 angeordnet ist. In der Lackieranlage 16 werden die Reibbeläge beschichtet. Hierzu ist der Lackieranlage 16 die Sandstrahlanlage 13 vorgeschaltet, in der evtl. Preß- und Schleifgrate entfernt und die Oberflächen der Belagträger für die Aufbringung des Lackes vorbereitet werden.

Auf die Sandstrahlanlage 13 folgt eine Kühlstrecke 15, in der die entsprechend vorbehandelten Reibbeläge auf einem sechsten kontinuierlichen Fördermittel 14 auf die korrekte Lackiertemperatur abgekühlt werden.

Hierauf folgt die eigentliche Lackieranlage 16, in der der Lack auf die Belagträgeroberflächen aufgebracht wird.

Aus der Lackieranlage 16 geraten die Reibbeläge mittels eines siebten kontinuierlichen Fördermittels 17 in einen Trockenofen 18, in dem der Lack auf den Belägen ausgehärtet bzw. getrocknet wird.

Auf den Trockenofen 18 folgt ein Kühlmodul 19, in dem die Reibbeläge zur weiteren Handhabung abgekühlt werden.

Zweckmäßigerweise ist eine Schleifstaubsammeleinrichtung 20 vorgesehen, in der der Schleifstaub sortenrein gesammelt und zur Wiederverwertung aufbereitet werden kann. Damit ist es möglich, auch bei Erstausrüstungsqualitäten einen Teil des Materials wieder aufzubereiten.

## Patentansprüche

1. Verfahren zur Herstellung von Reibbelägen, bei dem in einem Mischreaktor (1) Reibmasse in Form eines Granulatmaterials hergestellt wird, dieses Granulatmaterial mit Trägermasse und/oder Belagträgern in Preßformen (3) für bis zu 120 Sekunden zu Reibbelägen verpreßt wird, die fertig gepreßten Reibbeläge unmittelbar nach dem Verlassen der Preßformen (3) einspannungsfrei für einen vorgegebenen Zeitraum in einem Durchlaufofen (5) ausgehärtet werden, wobei die Reibbeläge zwischen den Preßformen (3) und dem Durchlaufofen (5) auf einem kontinuierlichen Fördermittel (4) transportiert werden, und die ausgehärteten Reibbeläge stromab des Durchlaufofens (5) in hintereinander angeordneten Scorch-Preßstationen (9) in einem vorgebbaren Zeitzyklus vorgebbaren Druck- und Temperaturbedingungen unterworfen werden.

2. Verfahren nach Anspruch 1, bei dem die fertig gepreßten Reibbeläge für ca. 35 Minuten im Durchlaufofen (5) ausgehärtet und zwischen dem Durchlaufofen (5) und den Scorch-Preßstationen (9) auf einem kontinuierlichen Fördermittel (6, 8) transportiert werden.

3. Verfahren nach Anspruch 1 oder 2, bei dem als Reibmasse in variablen Anteilen Kautschuk, Fasern und Reibwertbeeinflussungsstoffe vorgesehen sind.

4. Verfahren nach einem der Ansprüche 1 bis 3, bei dem das Granulatmaterial und ggf. die Trägermasse automatisch in die Preßformen (3) dosiert und die Belagträger automatisch den Preßformen (3) zugeführt werden.

5. Verfahren nach einem der Ansprüche 1 bis 3, bei dem den Preßformen (3) Vorpreßlinge aus Reib- und ggf. Trägermasse und die Belagträger zugeführt werden.

6. Verfahren nach einem der Ansprüche 1 bis 5, bei dem die fertig gepreßten Reibbeläge im wesentlichen mit der Temperatur, mit der sie die Preßformen (3) verlassen, in den Durchlaufofen (5) befördert werden.

7. Verfahren nach einem der Ansprüche 1 bis 6, bei dem die ausgehärteten Reibbeläge stromab des Durchlaufofens (5) und ggf. stromauf der Scorch-Preßstationen (9) auf Stärkenendmaß geschliffen werden.

8. Verfahren nach einem der Ansprüche 2 bis 7, bei dem in die Reibbeläge stromab der Scorch-Preßstationen (9) Nuten und/oder Schrägen eingeschliffen werden.

9. Verfahren nach einem der Ansprüche 2 bis 8, bei dem die Reibbeläge stromab der Scorch-Preßstationen (9) mit Lack beschichtet werden.

10. Verfahren nach Anspruch 9, bei dem zur Lackierung die Belagträgeroberfläche sandstrahlgeblasen wird, die Reibbeläge auf die vorgegebene Lackierungstemperatur gebracht werden, die Belagträgeroberflächen mit Lack beschichtet werden, der Lack getrocknet oder ausgehärtet wird und die Reibbeläge abgekühlt werden.

## Claims

1. Process for the manufacture of friction linings, in which friction composition is prepared in the form of a granular material in a mixing reactor (1), the granular material is compressed in compression moulds (3) for up to 120 seconds with a support composition and/or lining supports to form friction linings and, immediately after leaving the compression moulds (3), the finished compressed friction linings are cured for a given period of time in a through-type oven (5), without being restrained, the friction linings being transported between the compression moulds (3) and the through-type oven (5) on a continuous conveyor means (4), and, downstream of the through-type oven (5), the cured friction linings are subjected to specifiable pressure and temperature conditions in a specifiable time cycle in scorch compression stations (9) arranged one behind the other.

2. Process according to claim 1, in which the finished compressed friction linings are cured in the through-type oven (5) for approximately 35 minutes and are transported between the through-type oven (5) and the scorch compression stations (9) on a continuous conveyor means (6, 8).

3. Process according to claim 1 or 2, in which there are provided as the friction composition in variable proportions rubber, fibres and substances affecting the coefficient of friction.

4. Process according to any one of claims 1 to 3, in which the granular material and. where appropriate, the support composition are metered into the compression moulds (3) automatically and the lining supports are fed to the compression moulds (3) automatically.

5. Process according to any one of claims 1 to 3, in which there are fed to the compression moulds (3) pre-pressed pieces consisting of the friction composition and. where appropriate, the support composition and the lining supports.

6. Process according to any one of claims 1 to 5, in which the finished compressed friction linings are fed into the through-type oven (5) substantially at the temperature at which they leave the compression moulds (3).

7. Process according to any one of claims 1 to 6, in which the cured friction linings are ground to their final thickness downstream of the through-type oven (5) and upstream of the scorch compression stations (9), where present.

8. Process according to any one of claims 2 to 7, in which grooves and/or bevels are ground into the friction linings downstream of the scorch compression stations (9).

9. Process according to any one of claims 2 to 8, in which the friction linings are coated with lacquer downstream of the scorch compression stations (9).

10. Process according to claim 9, in which, for the purpose of lacquering, the surface of the lining support is sand blasted, the friction linings are brought to the given lacquering temperature, the surfaces of the lining supports are coated with lacquer, the lacquer is dried or cured, and the friction linings are cooled.

## Revendications

1. Procédé de fabrication de garnitures de friction, selon lequel on prépare dans un réacteur de mélange (1), une charge de friction sous la forme d'un produit en granulés, on presse ledit produit en granulés avec une charge-support et/ou avec des supports de garnitures dans des moules de pressage (3) pendant un temps de pressage allant jusqu'à 120 secondes pour former des garnitures de friction, immédiatement à leur sortie des moules de pressage (3), on durcit les garnitures terminées de pressage, sans serrage, pendant un laps de temps prédéterminé dans un four continu (5), les garnitures de friction étant transportées sur un moyen de transport (4) continu entre le moules de pressage (3) et le four continu (5) et les garnitures de friction durcies, en aval du four continu (5), étant soumises à des conditions de température et de pression prédéterminées, selon un cycle préétabli, dans des postes de grillage-pressage (5) disposés les uns à la suite des autres.

2. Procédé selon la revendication 1, selon lequel on durcit les garnitures de friction terminées de pressage pendant environ 35 minutes dans le four continu (5) et on les transporte sur un moyen de transport continu (6, 8), entre le four continu (5) et les postes de grillage-pressage (9).

3. Procédé selon la revendication 1 ou 2, selon lequel il est prévu comme charge de friction, en des proportions variables, du caoutchouc, des fibres et des substances modifiant le coefficient de frottement.

4. Procédé selon une des revendications 1 à 3, selon lequel on dose le produit en granulés et le cas échéant la charge-support de manière automatique dans les moules de pressage (3) et on introduit les supports de garniture de manière automatique dans les moules de pressage (3).

5. Procédé selon une des revendications 1 à 3, selon lequel on introduit dans les moules de pressage (3) des ébauches formées de charge de friction et le cas échéant de charge-support et les supports de garniture.

6. Procédé selon une des revendications 1 à 5, selon lequel on fait circuler les garnitures de friction terminées de pressage dans le four continu (5), essentiellement à la température à laquelle elles sortent des moules de pressage (3).

7. Procédé selon une des revendications 1 à 6, selon lequel on amène les garnitures de friction durcies à l'épaisseur définitive par meulage, en aval du four continu (5) et éventuellement en amont des postes de grillage-pressage (9).

8. Procédé selon une des revendications 2 à 7, selon lequel on réalise des rainures et/ou des chanfreins par meulage dans les garnitures de friction durcies, en aval des postes de grillage-pressage (9).

9. Procédé selon une des revendications 2 à 8, selon lequel on applique une couche de vernis sur les garnitures de friction, en aval des postes de pressage-grillage (9).

10. Procédé selon la revendication 9, selon lequel pour l'application de vernis, on sable la surface des supports de garniture, on amène les garnitures de friction à la température de vernissage prédéterminée, on applique le vernis sur les surfaces des supports de garniture, on sèche le vernis ou on le durcit et on refroidit les garnitures de friction.
